# EUROPÄISCHE PATENTSCHRIFT

(11) **EP 2 657 050 B1**
(45) Veröffentlichungstag und Bekanntmachung des Hinweises auf die Patenterteilung: **18.02.2015**
(21) Anmeldenummer: 13162085.8
(22) Anmeldetag: 03.04.2013
(51) Int. Cl.: B60C 27/08

(54) **Verbindungsglied- Montage ohne Werkzeug**
Connection member mounting without tool
Montage d'élément de raccordement sans outil

(30) Priorität: 25.04.2012 AT 4992012
(43) Veröffentlichungstag der Anmeldung: 30.10.2013
(73) Patentinhaber: PEWAG AUSTRIA GmbH, 8020 Graz (AT)
(72) Erfinder: Walenta, Walter, 8010 Graz (AT)
(74) Vertreter: Patentanwaltskanzlei Matschnig & Forsthuber OG

(56) Entgegenhaltungen:
- DE-B1- 2 904 000
- JP-A- S5 211 502
- JP-U- S6 058 949

## Beschreibung

Die Erfindung bezieht sich auf ein Verbindungsschloss für Reifenketten mit einer länglichen Aufnahmeöffnung zur Aufnahme zweier Kettenglieder, wobei die Aufnahmeöffnung von einem ersten durchgehenden Längssteg, von einem diesen gegenüberliegenden zweiten, durch eine Einführöffnung unterbrochenen zweiten Längssteg sowie von zwei Querstegen umrandet ist und die Kettenglieder in der Aufnahmeöffnung mittels eines Verschlussbolzens, welcher mit einem Ende in eine Bohrung des ersten Längssteges eingesetzt werden kann und mit seinem zweiten, freien Ende zu der Einführöffnung des zweiten Längssteges gerichtet ist, gegen Herausgleiten gesichert sind.

Aus dem Dokument JP S60 58949 U geht ein Verbindungsschloss für Reifenketten als bekannt hervor, das eine längliche Aufnahmeöffnung und einen Verschlussbolzen besitzt, der in eine Bohrung eines Längssteges eingesetzt werden kann, die als Sackbohrung ausgebildet ist. Der Bolzen ist jedoch mit einer aufwändigen Gewindeanordnung mit Mutter und Gegenmutter ausgestattet, was die Bedienung des Spannschlosses sehr erschwert, wobei über dies die Verwendung eines Innensechskant-Schlüssels erforderlich ist.

Ein ähnliches Verbindungsschloss ist in der DE 16 05 670 B2 geoffenbart. Bei diesem bekannten Verbindungsschloss ist der Verschlussbolzen ein Spiralspannstift, der in die als Durchgangsbohrung ausgebildete Bohrung des ersten Längssteges zur Sicherung der Kettenglieder eingesetzt wird. Allerdings ist der Kraftaufwand für das Einsetzen des Spannstiftes groß, es wird hierzu ein Hammer benötigt und es besteht eine erhebliche Gefahr von Verletzungen durch Absplitterungen des Spiralspannstiftes bei seinem Einschlagen in die Bohrung. Auch die Demontage des Spannschlosses durch Entfernen des Spiralspannstiftes ist problematisch, da entweder der Stift mit Hilfe eines Hammers und eines Durchschlages entfernt werden muss. In der Praxis ist der Spiralspannstift allerdings oft so korrodiert, dass das Verbindungsschloss zum Lösen der Kettenglieder mit einem Schneidbrenner durchschnitten werden muss.

Ein anderes Verbindungsschloss ist aus der DE 765 176 B bekannt geworden. Bei diesem Verbindungsglied ist der Verschlussbolzen verschiebbar in der Bohrung des ersten Längssteges gelagert und er trägt an seinem äußeren, der Lauffläche eines Fahrzeugreifens zugewandten Ende eine Verbreiterung in Form eines Kopfes, der im Gebrauch auf der Lauffläche aufliegt, sodass der Bolzen in einer Sperrstellung gehalten wird und die Kettenglieder gegen Herausgleiten aus dem Verbindungsschloss gesichert sind. Nachteilig an dieser Lösung ist der Umstand, dass bei lockerer Kette ein Anliegen des Kopfes des Verschlussbolzens an der Lauffläche nicht gewährleistet ist, sodass der Bolzen verrutschen und die Kettenglieder ungewollt freigeben kann.

Es ist eine Aufgabe der Erfindung, ein Verbindungsschloss zu schaffen, welches diese Nachteile nicht zeigt, und welches einzuhängende Kettenglieder sicher hält, wobei die Betätigung der Sicherung einfach und ohne Werkzeug zu bewerkstelligen ist.

Diese Aufgabe wird, ausgehend von einem Verbindungsschloss der eingangs genannten Art dadurch gelöst, dass erfindungsgemäß in dem ersten Längssteg von einer Seitenfläche ausgehend eine Gewindebohrung zu der Sacklochbohrung führt, ein Federdruckstück in die Gewindebohrung eingeschraubt ist, dessen federbelastetes Rastteil in die Sacklochbohrung gerichtet ist und bei in die Sacklochbohrung eingesetztem Verschlussbolzen in einer Vertiefung an dessen Umfang eingerastet ist.

Dank der Erfindung erhält man ein Verbindungsschloss, das mehrere Vorteile aufweist: Das Schloss ist von Hand ohne Werkzeuge zu montieren, wobei ein Verletzungsrisiko durch absplitternde Teile vermieden ist. Die Demontage nach einer Wintersaison oder für das Kürzen der Kette kann einfach durch Ausheben des Verschlussbolzens mit einem Schraubenzieher erfolgen. Im Vergleich zu einem Spiralspannstift, der im praktischen Gebrauch gelegentlich abschert, ist die Bruchsicherheit des massiven Verschlussbolzens größer. Da ein Sackloch vorliegt, das an der Laufflächenseite geschlossen ist, kann von dort kein Schmutz eindringen.

Bei einer zweckmäßigen Variante kann zur Vereinfachung des Zusammenbaus die Vertiefung im Verschlussbolzen als Umfangsrille ausgebildet sein.

In diesem Sinn ist es auch vorteilhaft, wenn das Rastteil als Kugel ausgebildet ist.

Um den Durchmesser der Sacklochbohrung bei guter Sicherung der Kettenglieder begrenzt halten zu können und um das Entfernen des Verschlussbolzens mit Hilfe z.B. eines Schraubenziehers zu ermöglichen, ist es empfehlenswert, wenn der Verschlussbolzen in dem in der Gewindebohrung sitzenden Abschnitt einen Durchmesser aufweist, der kleiner ist, als der Durchmesser des Abschnittes, der bei zusammengesetzten Schloss in der Aufnahmeöffnung liegt.

Die Erfindung samt weiteren Vorteilen ist im Folgenden an Hand einer beispielsweisen Ausführungsform näher erläutert, die in der Zeichnung veranschaulicht ist. In dieser zeigen
Fig. 1 in schaubildlicher Darstellung ein Verbindungsschloss nach der Erfindung vor der Montage des Verschlussbolzens,
Fig. 2 das Verbindungsschloss nach Fig. 1 mit eingehängten Kettengliedern und montiertem Verschlussbolzen, gleichfalls in schaubildlicher Darstellung,
Fig. 3 eine Seitenansicht eines Verbindungsschlosses nach der Erfindung mit montiertem Verschlussbolzen und Federdruckstück
Fig. 4 einen Schnitt nach der Linie IV-IV der Fig. 3.

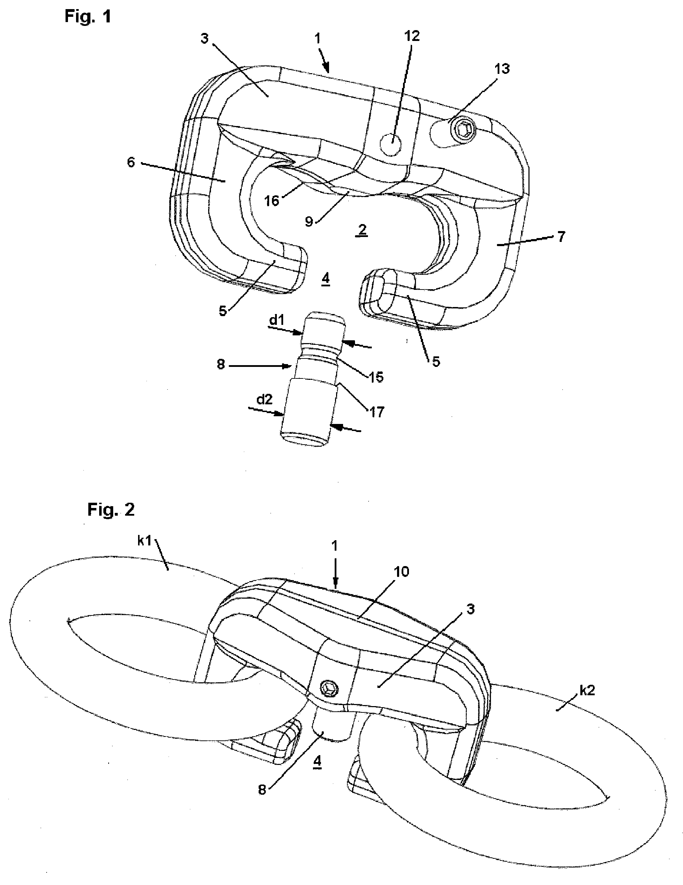

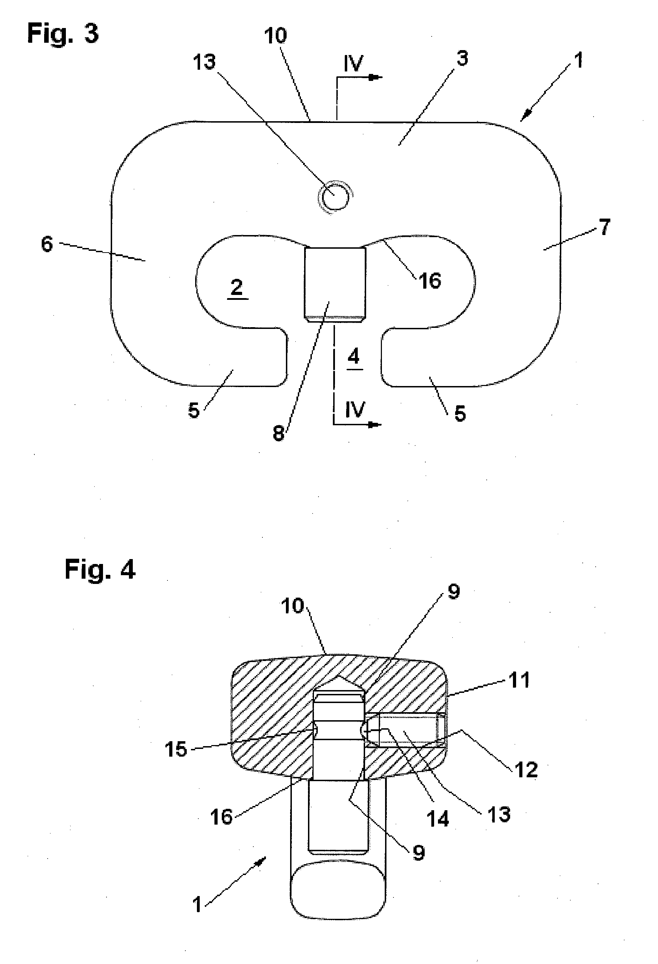

Wie aus Fig. 1 bis 4 ersichtlich weist ein Verbindungsschloss 1 nach der Erfindung eine länglichen Aufnahmeöffnung 2 zur Aufnahme zweier Kettenglieder k1, k2 auf, welche teil eines Laufnetzes einer Reifenkette, insbesondere einer Schneekette bzw. Reifenschutzkette sein können. Die in dem Verbindungsschloss ausgebildete Aufnahmeöffnung 2 ist von einem ersten durchgehenden Längssteg 3, von einem diesen gegenüberliegenden zweiten, durch eine Einführöffnung 4 unterbrochenen zweiten Längssteg 5 sowie von zwei Querstegen 6, 7 umrandet. Bei montiertem Schloss 1 sind die Kettenglieder k1, k2 in der Aufnahmeöffnung 2 mittels eines Verschlussbolzens 8 gegen Herausgleiten gesichert. Dieser Verschlussbolzen 8 ist im Wesentlichen kreiszylindrisch und kann mit einem Ende in eine Bohrung 9 des ersten Längssteges 3 eingesetzt werden. Er ist dann mit seinem zweiten, freien Ende zu der Einführöffnung 4 des zweiten Längssteges 3 gerichtet. Wie aus Fig. 4 ersichtlich, ist die Bohrung 9 als Sacklochbohrung ausgebildet, d.h. zu der Öffnung 2 hin offen, zu einer Außenfläche 10 die zur Fahrbahn gerichtet ist, jedoch geschlossen.

Zur Sicherung des Verschlussbolzens 8 gegen Herausfallen aus der Bohrung 9 führt in dem ersten Längssteg 3, von einer Seitenfläche 11 (siehe Fig. 4) ausgehend, eine Gewindebohrung 12 zu der Sacklochbohrung 9, wobei in diese Gewindebohrung 12 ein Federdruckstück 13 eingeschraubt ist. Das federbelastetes Rastteil 14 des Federdruckstücks 13, hier als Kugel ausgebildet, ist in die Sacklochbohrung gerichtet und bei eingesetztem Verschlussbolzen 8 in einer Vertiefung 15 an dessen Umfang eingerastet (siehe Fig.4). Mit Vorteil ist die Vertiefung 15 wie bei der gezeigten Ausführungsform als Umfangsrille ausgebildet.

Federdruckstücke sind in vielerlei Dimensionen, z.B. mit Gewinden M3 bis M20 im Handel erhältlich, wobei das Rastteil entweder als Kugel oder als Bolzen ausgebildet ist, siehe z.B. www.bossard.com.

Für einen Zusammenbau des Schlosses 1, ausgehend von der Situation nach Fig. 1 wird, vorausgesetzt das Federdruckstück 13 ist bereits in die Gewindebohrung eingeschraubt, der Verschlussbolzen 8 in die Bohrung 9 gedrückt, wobei zunächst das Rastteil 14 des Federdruckstücks 13 nach außen gedrängt wird, was durch das angefaste Ende des Bolzens 8 erleichtert wird. Bei weiteren Hineindrücken des Bolzens 8 in die Bohrung 9 gelangt die Vertiefung 15 in den Bereich des Federdruckstücks 13 und das Rastteil 14 rastet in diese Vertiefung 15 ein, sodass der Bolzen 8 nun gegen Herausfallen gesichert ist. Falls vor dem beschriebenen Zusammenbau die beiden Kettenglieder k1, k2 in der in Fig. 2 gezeigten Weise in die Öffnung 2 eingebracht wurden, sind diese Kettenglieder nun gegen Herausgleiten durch den Verschlussbolzen 8 gesichert, da er so bemessen ist, dass Einführöffnung 4 zumindest soweit versperrt ist, dass die Kettenglieder k1, k2 nicht zwischen dem verbleibenden Spalt zwischen dem freien Ende des Bolzens 8 und den beiden Enden des zweiten Längssteges 5, zwischen welchen die Einführöffnung 4 liegt, hindurch gleiten können.

Wie aus den Fig. 1 und 4 hervorgeht, besitzt der Verschlussbolzen 8 in jenem Abschnitt, mit dem er in die Sacklochbohrung 12 geschoben wird, einen Durchmesser d1, jedoch in dem Abschnitt, der bei zusammengesetzten Schloss 1 in der Aufnahmeöffnung 2 liegt, einen etwas größeren Durchmesser d2. Da andererseits die Innenfläche 16 des ersten Längssteges 3 nach innen zu der Öffnung 2 gewölbt ist, ist es möglich, an dem vorstehenden Rand 17 (siehe Fig. 1) des Abschnittes des Bolzens 8 mit größerem Durchmesser zum Entfernen des Bolzens 8 ein einfaches Werkzeug, z.B. einen Schraubenzieher anzusetzen, und den Bolzen außer Eingriff mit dem Rastteil 14 des Federdruckstücks 13 zu bringen, wobei dieses Rastteil gegen die Kraft der in dem Federdruckstück 13 eingebauten, jedoch nicht sichtbaren Feder zurückgedrängt wird.

Wie aus den Figuren ersichtlich, ist der erste Längssteg 3, in welchem die Bohrung 9 ausgebildet ist, stärker ausgebildet, als die Querstege 6,7 und der zweite Längssteg 5. Genauer gesagt ist er in einer Richtung parallel zu der Achse des Bolzens 8 und parallel zu den Querstegen 6,7 annähernd doppelt so dick wie der zweite Längssteg 5, mit der bereits erwähnten Wölbung im Bereich der Sacklochbohrung 9. Der erste Längssteg 3 ist auch in einer Richtung parallel zu der Achse der Gewindebohrung 12 dicker als der zweite Längssteg 5, wobei die größte Dicke im Bereich der Gewindebohrung 12 sowie der Sacklochbohrung 9 vorliegt.

Das Verbindungsschloss ist beispielsweise aus Einsatzstahl gefertigt, und sein Verschlussbolzen 8 aus Vergütungsstahl. Für das Federdruckstück 13 kann in Hinblick auf den Einsatzzweck z.B. bei einer Schneekette eine nichtrostende Ausführung verwendet werden.

### LISTE DER BEZUGSZEICHEN (nicht Bestandteil der Anmeldung)

- 1: Verbindungsschloss
- 2: Aufnahmeöffnung
- 3: erster Längssteg
- 4: Einführöffnung
- 5: zweiter Längssteg
- 6: Quersteg
- 7: Quersteg
- 8: Verschlussbolzen
- 9: Bohrung
- 10: Außenfläche
- 11: Seitenfläche
- 12: Gewindebohrung
- 13: Federdruckstück
- 14: Rastteil
- 15: Vertiefung
- 16: Innenfläche von 3
- 17: Rand, vorstehender
- d1: Durchmesser
- d2: Durchmesser
- k1: Kettenglied
- k2: Kettenglied

## Patentansprüche

1. Verbindungsschloss (1) für Reifenketten mit einer länglichen Aufnahmeöffnung (2) zur Aufnahme zweier Kettenglieder (k1, k2), wobei die Aufnahmeöffnung von einem ersten durchgehenden Längssteg (3), von einem diesen gegenüberliegenden zweiten, durch eine Einführöffnung (4) unterbrochenen zweiten Längssteg (5) sowie von zwei Querstegen (6, 7) umrandet ist und die Kettenglieder in der Aufnahmeöffnung mittels eines Verschlussbolzens (8), welcher mit einem Ende in eine als Sacklochbohrung ausgebildete Bohrung (9) des ersten Längssteges eingesetzt werden kann und mit seinem zweiten, freien Ende zu der Einführöffnung des zweiten Längssteges gerichtet ist, gegen Herausgleiten gesichert sind,
**dadurch gekennzeichnet, dass**
in dem ersten Längssteg (3) von einer Seitenfläche (11) ausgehend eine Gewindebohrung (12) zu der Sacklochbohrung (9) führt, in die Gewindebohrung (12) ein Federdruckstück (13) eingeschraubt ist, dessen federbelastetes Rastteil (14) in die Sackbohrung gerichtet ist und bei in die Sackbohrung eingesetztem Verschlussbolzen (8) in einer Vertiefung (15) an dessen Umfang eingerastet ist.

2. Verbindungsschloss (1) nach Anspruch 1, **dadurch gekennzeichnet, dass** die Vertiefung (15) als Umfangsrille ausgebildet ist.

3. Verbindungsschloss (1) nach Anspruch 1 oder 2, **dadurch gekennzeichnet, dass** das Rastteil (14) als Kugel ausgebildet ist.

4. Verbindungsschloss (1) nach einem der Ansprüche 1 bis 3, **dadurch gekennzeichnet, dass** der Verschlussbolzen (8) in dem in der Gewindebohrung (12) sitzenden Abschnitt einen Durchmesser (d1) aufweist, der kleiner ist, als der Durchmesser (d2) des Abschnittes, der bei zusammengesetzten Schloss (1) in der Aufnahmeöffnung (2) liegt.

## Claims

1. Connecting lock (1) for tyre chains, comprising an elongate receiving opening (2) for receiving two chain links (k1, k2), the receiving opening being surrounded by a continuous first longitudinal crosspiece (3), by a second longitudinal crosspiece (5) positioned opposite thereto and interrupted by an insertion opening (4), and by two transverse crosspieces (6, 7), the chain links being secured within the receiving opening from sliding out by means of a closing bolt (8), which can be inserted at its first end into a bore (9) realized as a blind bore in the first longitudinal crosspiece and is directed via its free second end toward the insertion opening in the second longitudinal crosspiece,
**characterized in that**
in the first longitudinal crosspiece (3), a threaded bore (12) leads to the blind bore (9), starting from a side face (11),
into the threaded bore (12) a spring pressure piece (13) is screwed, whose spring-loaded detent element (14) is directed into the blind bore and is latched into a recess (15) in the periphery of said closing bolt, when the closing bolt (8) is inserted into the blind bore.

2. The connecting lock (1) according to claim 1, **characterized in that** the recess (15) is realized as a peripheral groove.

3. The connecting lock (1) according to claim 1 or 2, **characterized in that** the detent element (14) is realized as a ball.

4. The connecting lock (1) according to any one of claims 1 to 3, **characterized in that** the closing bolt (8), in the portion located in the threaded bore (12), has a diameter (d1) that is smaller than the diameter (d2) of the portion located in the receiving opening (2) when the lock (1) is assembled.

## Revendications

1. Maillon de raccordement (1) pour chaînes de pneus, comprenant une ouverture de logement (2) allongée servant à loger deux chaînons (k1, k2), sachant que l'ouverture de logement est encadrée par une première traverse longitudinale (3) continue, par une deuxième traverse longitudinale (5) opposée à la première traverse longitudinale et interrompue par une ouverture d'introduction (4) ainsi que par deux traverses transversales (6, 7) et sachant que les chaînons sont bloqués pour les empêcher de glisser dans l'ouverture de logement au moyen d'un boulon de fermeture (8), qui peut être inséré par une extrémité dans un alésage (9), réalisé sous la forme d'un alésage borgne, de la première traverse longitudinale et qui est orienté par sa deuxième extrémité libre en direction de l'ouverture d'introduction de la deuxième traverse longitudinale,
**caractérisé en ce**
**que** dans la première traverse longitudinale (3), un alésage taraudé (12) mène en direction de l'alésage borgne (9) en partant d'une face latérale (11), en ce qu'une pièce de pression à ressort (13) est vissée dans l'alésage taraudé (12), dont la partie d'enclenchement (14) soumise à la contrainte du ressort est dirigée dans l'alésage borgne et est enclenchée, dans un renfoncement (15), au niveau de la périphérie du boulon de fermeture (8), lorsque ce dernier est inséré dans l'alésage borgne.

2. Maillon de raccordement (1) selon la revendication 1, **caractérisé en ce que** le renfoncement (15) est réalisé sous la forme d'une rainure périphérique.

3. Maillon de raccordement (1) selon la revendication 1 ou 2, **caractérisé en ce que** la partie d'enclenchement (14) est réalisée sous la forme d'une sphère.

4. Maillon de raccordement (1) selon l'une quelconque des revendications 1 à 3, **caractérisé en ce que** le boulon de fermeture (8) présente, dans la section reposant dans l'alésage taraudé (12), un diamètre (d1), qui est plus petit que le diamètre (d2) de la section qui se trouve dans l'ouverture de logement (2) lorsque le maillon de raccordement (1) est monté.
